# EUROPEAN PATENT APPLICATION

(11) **EP 4 700 951 A1**
(43) Date of publication of application: **25.02.2026**
(21) Application number: 24931144.0
(22) Date of filing: 11.12.2024
(51) Int. Cl.: H01M 50/342, H01M 50/271, H01M 50/593, H01M 50/204, H01M 50/249

(54) **BATTERY MODULE**

(30) Priority: 19.03.2024 KR 20240037961
(71) Applicant: LG Energy Solution, Ltd., Seoul 07335 (KR)
(72) Inventor: KIM, Gun-Ryang, Daejeon 34122 (KR); KANG, Jae-Hyuk, Daejeon 34122 (KR); AHN, Moon-Youl, Daejeon 34122 (KR); SHIN, Jong-Hong, Daejeon 34122 (KR)
(74) Representative: BCKIP Part mbB
(86) International application number: PCT/KR2024/096681
(87) International publication number: WO 2025/198148

(57) **Abstract**

Disclosed is a battery module. The battery module includes a base plate; a plurality of battery cells positioned on an upper surface of the base plate; a top plate positioned above the plurality of battery cells and having a first venting hole; a top cover coupled to an upper surface of the top plate and having a score line facing the first venting hole; and an insulation cover positioned between the top plate and the plurality of battery cells and having a second venting hole facing the first venting hole.

## Description

### TECHNICAL FIELD

The present disclosure relates to a battery module.

The present application claims priority to Korean Patent Application No. 10-2024-0037961 filed on March 19, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a battery module capable of rapidly discharging a venting gas when a thermal event occurs.

The present disclosure is also directed to providing a battery module capable of blocking the inflow of a venting gas.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a base plate; a plurality of battery cells positioned on an upper surface of the base plate; a top plate positioned above the plurality of battery cells and having a first venting hole; a top cover coupled to an upper surface of the top plate and having a score line facing the first venting hole; and an insulation cover positioned between the top plate and the plurality of battery cells and having a second venting hole facing the first venting hole.

In addition, the score line may be configured to be separated when a thermal event occurs from the battery cell.

In addition, the insulation cover may include a protrusion that protrudes upward from a periphery of the second venting hole, and the protrusion may be inserted into the first venting hole.

In addition, the protrusion may support the top cover.

In addition, the protrusion may extend along the periphery of the second venting hole.

In addition, the insulation cover may further include a support portion that extends from the protrusion into the second venting hole.

In addition, the support portion may support the top cover.

In addition, the score line may extend along a periphery of the first venting hole.

In addition, the score line may form a separation area.

In addition, the insulation cover may include a protrusion that protrudes upward from a periphery of the second venting hole, and the protrusion may support the separation area.

In addition, the insulation cover may further include a guard protruding toward the plurality of battery cells.

In addition, the battery module may further comprise a pad disposed between the plurality of battery cells, and the guard may support the pad.

In addition, the guard may be provided as a pair, and a top end of the pad may be located between the pair of guards.

In addition, the pair of guards and the pad may extend along a longitudinal direction of one battery cell among the plurality of battery cells.

In addition, the battery module may further comprise an adhesive member disposed between the insulation cover and the top plate.

A battery pack according to one aspect of the present disclosure may include the battery module of the present disclosure.

A vehicle according to another aspect of the present disclosure may include the battery module of the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, thermal events caused by flame or gas out of the battery module may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a drawing showing the battery pack of FIG. 1, in which some components are exploded.
FIG. 3 is a drawing showing a battery module of FIG. 2.
FIG. 4 is a drawing showing the battery module of FIG. 3, in which some components are exploded.
FIG. 5 is a drawing showing a battery array of FIG. 4, in which some components are exploded.
FIG. 6 is a drawing showing a top cover of FIG. 4.
FIG. 7 is an enlarged drawing showing a part B of FIG. 6.
FIG. 8 is a drawing showing that a separation area in FIG. 7 is separated from the top cover.
FIG. 9 is a drawing showing a top plate of FIG. 4.
FIG. 10 is an enlarged drawing showing a part C of FIG. 9.
FIG. 11 is a drawing showing an insulation cover of FIG. 4.
FIG. 12 is an enlarged drawing showing a part D of FIG. 11.
FIG. 13 is a cross-sectional view taken along the cutting line E-E' of FIG. 12.
FIG. 14 is a cross-sectional view taken along the cutting line A-A' of FIG. 1.
FIGS. 15 and 16 are cross-sectional views taken along the cutting line A-A' of FIG. 1 when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

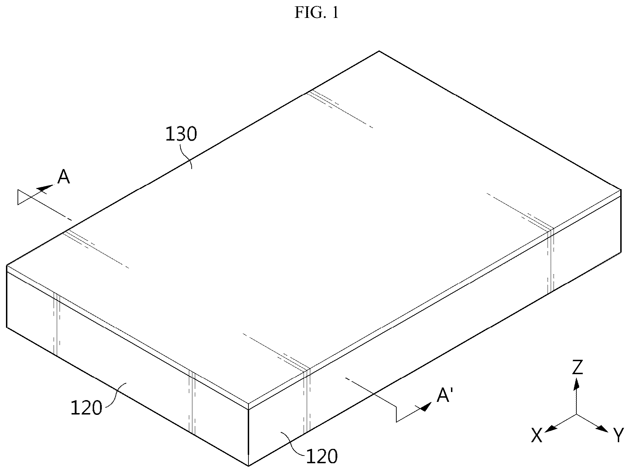

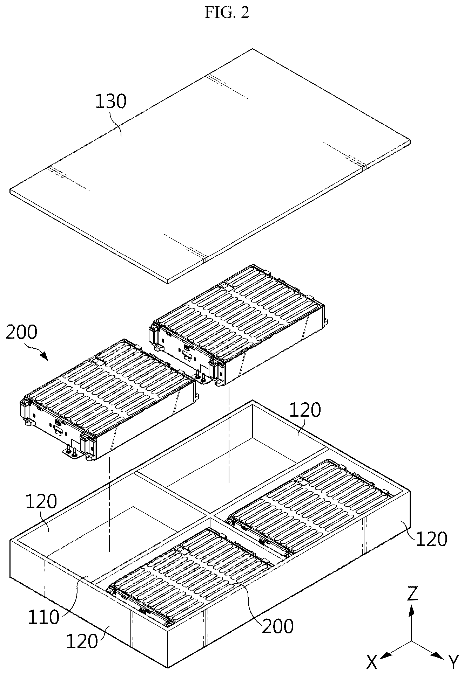

FIG. 1 is a diagram showing a battery pack according to an embodiment of the present disclosure. FIG. 2 is a drawing showing the battery pack of FIG. 1, in which some components are exploded.

Referring to FIGS. 1 and 2, the battery pack according to an embodiment of the present disclosure may include a bottom plate 110, a side wall 120, a pack cover 130, and a battery module 200. The bottom plate 110 may have a rectangular plate shape. The bottom plate 110 may form the appearance of the battery pack.

The side wall 120 may be installed, coupled, fixed, fastened or attached to the upper surface of the bottom plate 110. The side wall 120 may form the appearance of the battery pack. For example, the side wall 120 may be composed of four pieces. The bottom plate 110 and the side wall 120 may provide a space therein.

The pack cover 130 may have a rectangular plate shape. The pack cover 130 may be installed, coupled, fixed, fastened or attached to the side wall 120.

The battery module 200 may be installed, coupled, fixed, fastened or attached to the inner space of the battery pack. The battery module 200 may be provided in plurality. For example, the battery pack may include four battery modules 200.

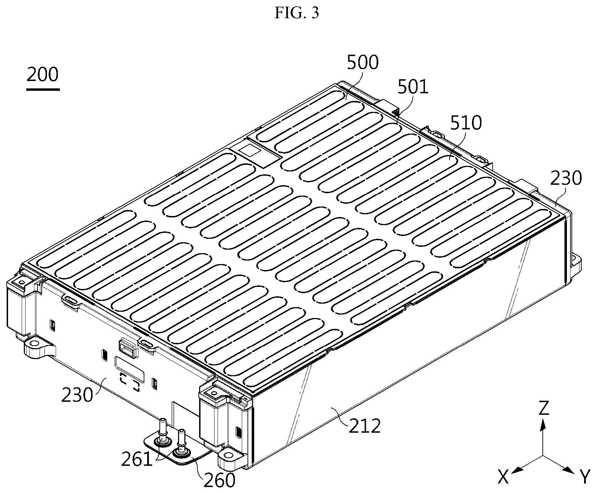

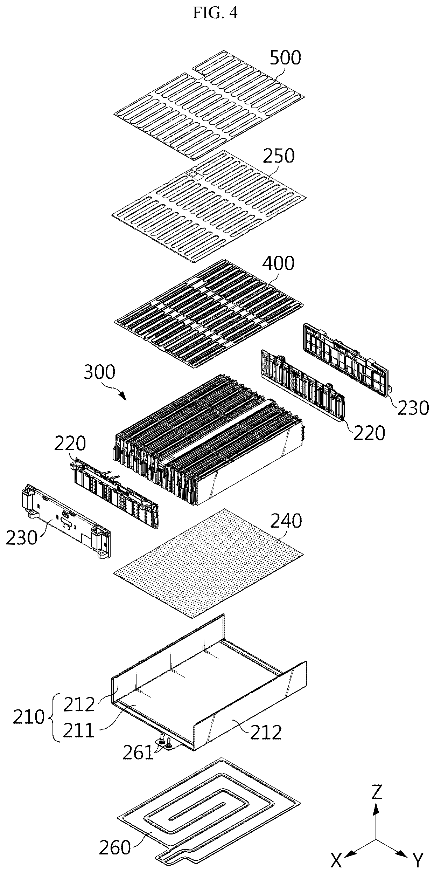

FIG. 3 is a drawing showing a battery module 200 of FIG. 2. FIG. 4 is a drawing showing the battery module 200 of FIG. 3, in which some components are exploded.

Referring to FIGS. 3 and 4, the battery module 200 according to an embodiment of the present disclosure may include a base plate 211, a battery cell 310, a top plate 250, a top cover 500, and an insulation cover 400.

The base plate 211 may have a rectangular plate shape. The base plate 211 may form the appearance of the battery module 200.

The battery cell 310 may mean a secondary battery. The battery cell 310 may have a pouch shape. However, the shape of the battery cell 310 is not limited to the pouch shape, and the battery cell 310 may have various shapes such as a cylindrical shape or a rectangular parallelepiped shape. In addition, the battery cell 310 may be provided in plurality. The plurality of battery cells 310 may be positioned on the upper surface of the base plate 211.

The top plate 250 may be positioned above the plurality of battery cells 310. The top plate 250 may have a rectangular plate shape. The top plate 250 may cover the plurality of battery cells 310. In addition, the top plate 250 may have a first venting hole 251. The first venting hole 251 may penetrate the top plate 250. The first venting hole 251 may expose the battery cell 310 to the outside. In addition, the first venting hole 251 may face the plurality of battery cells 310. In addition, the first venting hole 251 may be formed in plurality. The plurality of first venting holes 251 may be arranged along the front and rear direction or the X-axis direction. The plurality of first venting holes 251 may be arranged along the right and left direction or the Y-axis direction. The top plate 250 may contain a metal material.

The top cover 500 may be positioned on the top plate 250. Also, the top cover 500 may be installed, coupled, fixed, fastened, or attached to the upper surface of the top plate 250. The top cover 500 may have a rectangular plate shape. The top cover 500 may contain a heat-resistant material. The top cover 500 may contain a fire-resistant material. The top cover 500 may contain a flame-retardant material. For example, the top cover 500 may contain a silicone material.

The top cover 500 may include a score line 501. The score line 501 may be used as a term that includes and collectively refers to a perforated line 501, a notching line 501, a cutting line 501, a shredding line 501, a tear line 501, or a separation line 501.

The score line 501 may face the first venting hole 251. The score line 501 may be provided to correspond to the plurality of first venting holes 251 in one-to-one relationship. The plurality of score lines 501 may be arranged along the front and rear direction or the X-axis direction. The plurality of score lines 501 may be arranged along the right and left direction or the Y-axis direction.

The insulation cover 400 may be positioned between the top plate 250 and the plurality of battery cells 310. In addition, the insulation cover 400 may be installed, coupled, fixed, fastened or attached to the lower surface of the top plate 250. The insulation cover 400 may have a rectangular plate shape. The insulation cover 400 may also be referred to as an insulation film 400. The insulation cover 400 may have electrical insulation properties. The insulation cover 400 may contain a heat-resistant material. The insulation cover 400 may contain a fire-resistant material. The insulation cover 400 may contain a flame-retardant material. For example, the insulation cover 400 may contain a polycarbonate material.

In addition, the insulation cover 400 may have a second venting hole 401. The second venting hole 401 may penetrate the insulation cover 400. The second venting hole 401 may expose the battery cell 310 to the outside. In addition, the second venting hole 401 may face the plurality of battery cells 310. In addition, the second venting hole 401 may face the first venting hole 251. In addition, the second venting hole 401 may be formed in plurality. The plurality of second venting holes 401 may be provided to correspond to the plurality of first venting holes 251 in one-to-one relationship. The plurality of second venting holes 401 may be arranged along the front and rear direction or the X-axis direction. The plurality of second venting holes 401 may be arranged along the right and left direction or the Y-axis direction.

According to this configuration of the present disclosure, the thermal safety of the battery module 200 may be improved. When a thermal event occurs from the battery cell 310, the venting gas g may flow through the second venting hole 401 and the second venting hole 401. In addition, the venting gas g may separate the score line 501 of the top cover 500 and be discharged to the outside of the battery module 200.

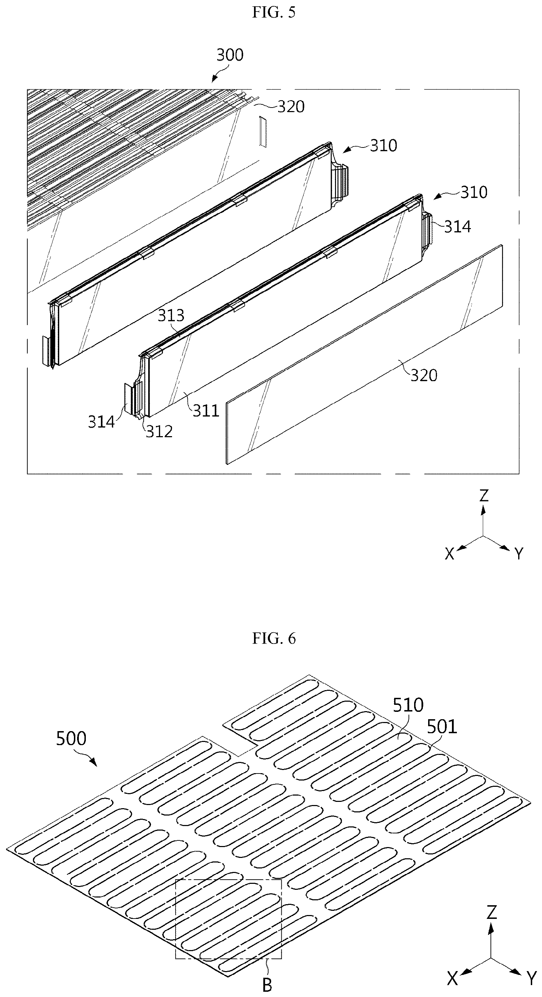

FIG. 5 is a drawing showing a battery array 300 of FIG. 4, in which some components are exploded. Referring to FIGS. 3 to 5, the battery module 200 according to an embodiment of the present disclosure may include a frame 210, a heatsink 260, a battery array 300, a heat transfer member 240, a bus bar frame assembly 220, and an end cover 230.

The frame 210 may include a base plate 211 and a side plate 212. The frame 210 may provide a space therein. The side plates 212 may be configured as a pair. The base plate 211 and the pair of side plates 212 may be formed integrally. The frame 210 may form the appearance of the battery module 200. The top plate 250 may be installed, coupled, fixed, fastened, or attached to the side plate 212. For example, the top plate 250 may be coupled to the pair of side plates 212 by welding.

The heatsink 260 may be installed, coupled, secured, fastened, or attached to the lower surface of the base plate 211. The heatsink 260 may have a flow path therein. The base plate 211 may include a pair of ports 261. Also, an internal flow path of the heatsink 260 may be in communication with the pair of ports 261. A cooling medium may be supplied to and discharged from the flow path inside the heatsink 260 through the ports 261.

The battery array 300 may include a plurality of battery cells 310 and pads 320. The plurality of battery cells 310 may be stacked or arranged along the right and left direction or the Y-axis direction. Also, each battery cell 310 may extend along the front and rear direction or the X-axis direction. The battery cell 310 may include an accommodation portion 311, a first sealing portion 312, a second sealing portion 313, and an electrode lead 314. The accommodation portion 311 may include an electrode assembly. Also, the electrode assembly may be accommodated in the cell case. The first sealing portion 312 may be a portion where the cell case is sealed. The first sealing portion 312 may protrude forward and rearward from the accommodation portion 311, respectively. The second sealing portion 313 may protrude upward from the accommodation portion 311. The electrode lead 314 may protrude forward and backward from the first sealing portion 312, respectively. When a thermal event occurs, the venting gas g may be discharged through the second sealing portion 313.

The pad 320 may be arranged between the plurality of battery cells 310. The pad 320 may be extended along the front and rear direction or the X-axis direction. The pad 320 may be provided in plurality. In addition, the pad 320 may have electrical insulation. The pad 320 may contain a heat-resistant material. The pad 320 may contain a fire-resistant material. The pad 320 may contain a flame-retardant material. The pad 320 may have elasticity. For example, the pad 320 may contain a silicone material. Referring to FIG. 5, the pad 320 may be provided between every two battery cells 310.

The heat transfer member 240 may be positioned between the battery array 300 and the base plate 211. The heat transfer member 240 may contain a material having high thermal conductivity. Also, the heat transfer member 240 may attach or fix the battery array 300 to the base plate 211.

The bus bar frame assembly 220 may be coupled to the front and rear sides of the battery array 300, respectively. The bus bar frame assembly 220 may be electrically connected to the electrode lead 314 of the battery array 300.

The end cover 230 may be provided as a pair. The pair of end covers 230 may cover the bus bar frame assembly 220, respectively. The end cover 230 may form the appearance of the battery module 200.

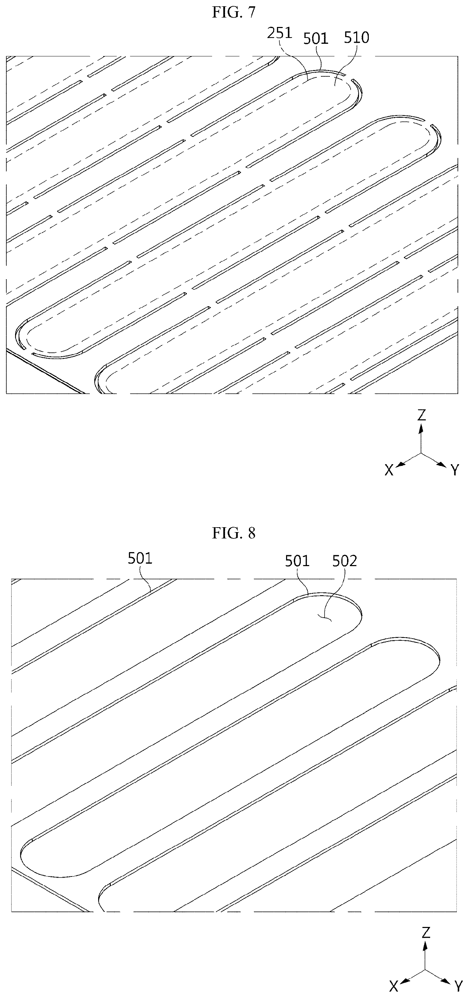

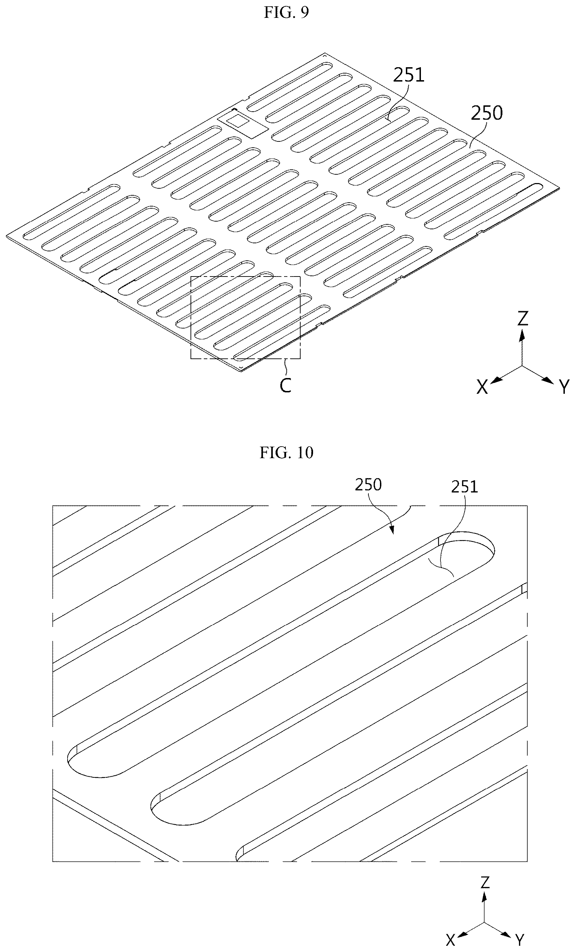

FIG. 6 is a drawing showing a top cover 500 of FIG. 4. FIG. 7 is an enlarged drawing showing a part B of FIG. 6. FIG. 8 is a drawing showing that a separation area 510 in FIG. 7 is separated from the top cover 500. FIG. 9 is a drawing showing a top plate 250 of FIG. 4. FIG. 10 is an enlarged drawing showing a part C of FIG. 9.

Referring to FIGS. 6 to 10, the score line 501 of the battery module 200 according to an embodiment of the present disclosure may extend along the periphery of the first venting hole 251. The score line 501 may form a separation area 510. The separation area 510 may be a region surrounded by the score line 501. The separation area 510 may be formed to be larger than the first venting hole 251. Alternatively, the separation area 510 may have a diameter larger than the diameter of the first venting hole 251.

According to this configuration of the present disclosure, the thermal safety of the battery module 200 may be improved. When a thermal event occurs from the battery cell 310, the venting gas g may flow through the second venting hole 401 and the second venting hole 401. In addition, the venting gas g may separate the score line 501 of the top cover 500 and be discharged to the outside of the battery module 200.

In addition, according to this configuration of the present disclosure, foreign substances, venting gas g, ignitable particles, etc. generated from the outside may be blocked from flowing into the battery module 200. Since the separation area 510 is formed to be larger than the first venting hole 251, the first venting hole 251 may support the separation area 510. As a result, even if foreign substances, venting gas g, ignitable particles, etc. generated from the outside pressurize the separation area 510, the separation area 510 may not be separated. As a result, heat propagation to the battery module 200 may be blocked.

Referring to FIGS. 6 to 8, the separation area 510 of the battery module 200 according to an embodiment of the present disclosure may be configured to be separable when a thermal event occurs. When a thermal event occurs inside the battery module 200, the venting gas g discharged through the second sealing portion 313 of the battery cell 310 may pressurize the separation area 510 upward or in the +Z-axis direction. At this time, the separation area 510 may be separated or removed from the top cover 500. By separating or removing the separation area 510, a third venting hole 502 may be formed. The third venting hole 502 may face the first venting hole 251 and the second venting hole 401. In addition, the first venting hole 251, the second venting hole 401, and the third venting hole 502 may be communicated with each other.

According to this configuration of the present disclosure, the thermal safety of the battery module 200 may be improved. When a thermal event occurs from the battery cell 310, the venting gas g may be discharged to the outside of the battery module 200 through the first venting hole 251, the second venting hole 401, and the third venting hole 502. As a result, heat propagation inside the battery module 200 may be blocked.

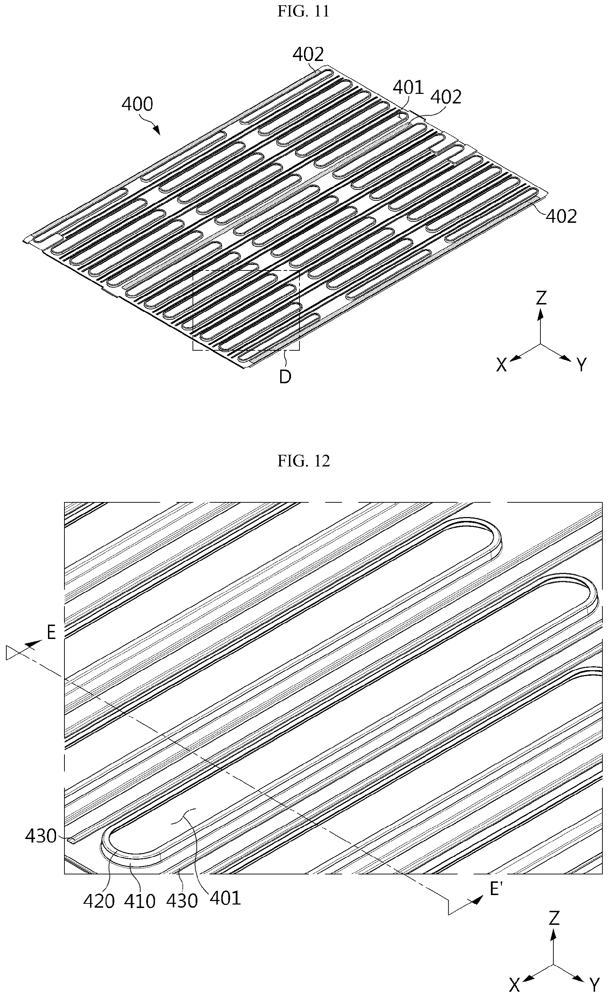

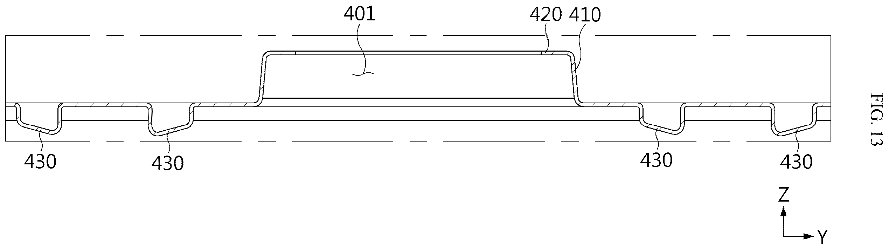

FIG. 11 is a drawing showing an insulation cover 400 of FIG. 4. FIG. 12 is an enlarged drawing showing a part D of FIG. 11. FIG. 13 is a cross-sectional view taken along the cutting line E-E' of FIG. 12.

Referring to FIGS. 11 to 13, the battery module 200 according to an embodiment of the present disclosure may include an adhesive member 402. The adhesive member 402 may be disposed between the insulation cover 400 and the top plate 250. The adhesive member 402 may attach, couple, or fix the insulation cover 400 to the lower surface of the top plate 250. The adhesive member 402 may extend along the front and rear direction or the X-axis direction. The adhesive member 402 may be provided in plurality. The plurality of adhesive members 402 may be arranged along the right and left direction or the Y-axis direction.

According to this configuration of the present disclosure, the adhesive member 402 may be stably fixed to the top plate 250.

Referring to FIGS. 11 to 13, the insulation cover 400 of the battery module 200 according to an embodiment of the present disclosure may include a protrusion 410.

The protrusion 410 may be formed at the periphery of the second venting hole 401. The protrusion 410 may protrude in the upward direction or the +Z-axis direction. Also, the protrusion 410 may extend along the periphery of the second venting hole 401.

According to this configuration of the present disclosure, the thermal safety of the battery module 200 may be improved. When a thermal event occurs from the battery cell 310, the protrusion 410 may guide the venting gas g to flow upward.

Referring to FIGS. 11 to 13, the insulation cover 400 of the battery module 200 according to an embodiment of the present disclosure may include a support portion 420.

The support portion 420 may extend from the protrusion 410. The support portion 420 may extend into the second venting hole 401. Also, the support portion 420 may extend along the periphery of the protrusion 410 or the periphery of the second venting hole 401.

According to this configuration of the present disclosure, the rigidity of the protrusion 410 may be improved. In addition, the protrusion 410 may stably maintain its shape. In addition, the support portion 420 may support the separation area by coming into contact with the top cover 500. Accordingly, even if the separation area 510 is pressurized by the foreign substance, venting gas g, ignitable particle, etc. generated from the outside, the separation area 510 may not be separated. Accordingly, heat propagation to the battery module 200 may be blocked.

Referring to FIGS. 11 to 13, the insulation cover 400 of the battery module 200 according to an embodiment of the present disclosure may include a guard 430. The guard 430 may protrude downward from the insulation cover 400 or in the -Z-axis direction. In addition, the guard 430 may extend along the front and rear direction or the X-axis direction. The guard 430 may be provided in plurality. The plurality of guards 430 may be arranged along the right and left direction or the Y-axis direction.

According to this configuration of the present disclosure, the thermal safety of the battery module 200 may be improved. When a thermal event occurs from the battery cell 310, the guard 430 may block the venting gas g from flowing along the right and left direction or the Y-axis direction. As a result, the venting gas g may flow upward.

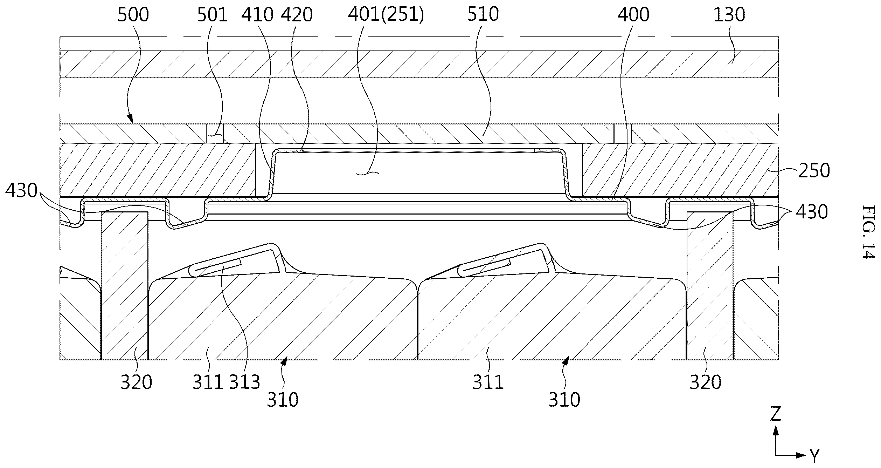

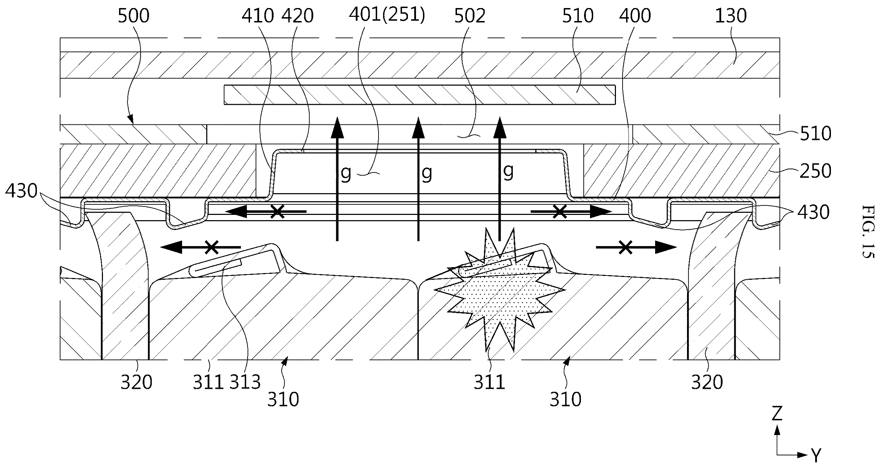

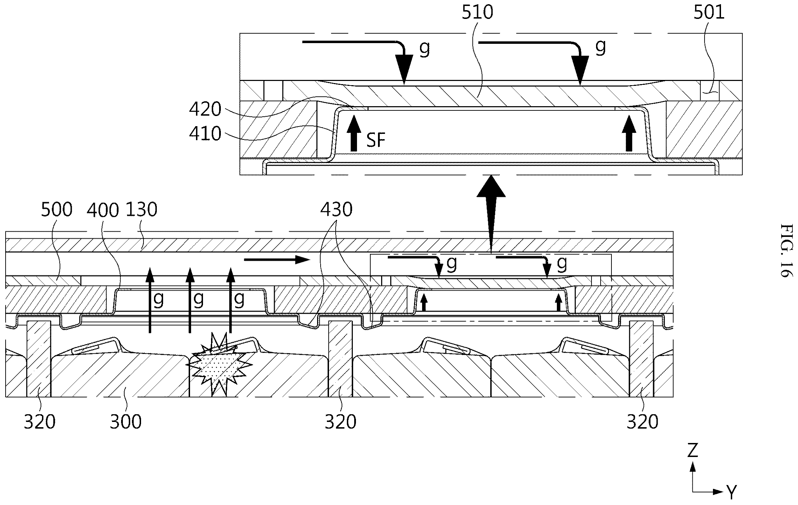

FIG. 14 is a cross-sectional view taken along the cutting line A-A' of FIG. 1. FIGS. 15 and 16 are cross-sectional views taken along the cutting line A-A' of FIG. 1 when a thermal event occurs.

Referring to FIGS. 14 to 16, the protrusion 410 of the battery module 200 according to an embodiment of the present disclosure may be inserted into the first venting hole 251.

According to this configuration of the present disclosure, the electrical safety of the battery module 200 may be improved. By inserting the protrusion 410 into the first venting hole 251 of the top plate 250, the top plate 250 and the plurality of battery cells 310 may be electrically insulated.

In addition, according to this configuration of the present disclosure, the thermal safety of the battery module 200 may be improved. The protrusion 410 may guide the venting gas g to flow upward.

Referring to FIGS. 14 to 16, the protrusion 410 of the battery module 200 according to an embodiment of the present disclosure may support the top cover 500. The protrusion 410 may support the separation area 510 of the top cover 500. Alternatively, the protrusion 410 may be in contact with the separation area 510.

According to this configuration of the present disclosure, the thermal safety of the battery module 200 may be improved. Since the separation area 510 is supported by the protrusion 410, even if the foreign substance, venting gas g, ignitable particle, etc. generated from the outside presses the separation area 510 in the downward direction or in the -Z-axis direction, the separation area 510 may not be separated. As a result, the foreign substance, venting gas g, ignitable particle, etc. generated from the outside may be blocked from flowing into the battery module 200.

Referring to FIGS. 14 to 16, the support portion 420 of the battery module 200 according to an embodiment of the present disclosure may support the top cover 500. The support portion 420 may support the separation area 510 of the top cover 500. Alternatively, the support portion 420 may be in contact with the separation area 510.

According to this configuration of the present disclosure, the thermal safety of the battery module 200 may be improved. Since the separation area 510 is supported by the support portion 420, even if the foreign substance, venting gas g, ignitable particle, etc. generated from the outside presses the separation area 510 in the downward direction or in the -Z-axis direction, the separation area 510 may not be separated. As a result, the foreign substance, venting gas g, ignitable particle, etc. generated from the outside may be blocked from flowing into the battery module 200.

Referring to FIGS. 14 to 16, the width of the separation area 510 of the battery module 200 according to an embodiment of the present disclosure in the right and left direction or Y-axis direction may be larger than the width of the first venting hole 251 in the right and left direction or Y-axis direction. In addition, the width of the first venting hole 251 in the right and left direction or Y-axis direction may be larger than the width of the second venting hole 401 in the right and left direction or Y-axis direction.

According to this configuration of the present disclosure, the thermal safety of the battery module 200 may be improved. Since the separation area 510 is supported by the top plate 250 or the insulation cover 400, even if foreign substances, venting gas g, ignitable particles, etc. generated from the outside pressurize the separation area 510 in the downward direction or in the -Z-axis direction, the separation area 510 may not be separated. As a result, the foreign substances, venting gas g, ignitable particles, etc. generated from the outside may be blocked from flowing into the battery module 200.

Referring to FIGS. 14 to 16, when a thermal event occurs, the venting gas g may separate the separation area 510. The venting gas g may pass through the first venting hole 251 and the second venting hole 401 and pressurize the separation area 510 in the upward direction or +Z-axis direction. As a result, the separation area 510 may be separated from the top cover 500, and a third venting hole 502 may be formed. The venting gas g may be discharged to the outside of the battery module 200 through the third venting hole 502.

The discharged venting gas g may flow between the top cover 500 and the pack cover 130. Also, the venting gas g may be discharged to the outside of the battery pack through a venting device or a gas valve provided in the battery pack.

At this time, the venting gas g flowing between the top cover 500 and the pack cover 130 may pressurize the non-separated separation area 510 in the downward direction or the -Z-axis direction. The top plate 250 or the insulation cover 400 may provide a support force (SF) to the separation area 510. Since the separation area 510 is supported by the top plate 250 or the insulation cover 400, even if foreign substance, venting gas g, ignitable particle, etc. generated from the outside pressurize the separation area 510 in the downward direction or the -Z-axis direction, the separation area 510 may not be separated. As a result, the venting gas g discharged to the outside of the battery module 200 may be blocked from flowing into the battery module 200 or another battery module 200. Accordingly, heat propagation to the battery module 200 and the battery pack may be blocked.

Referring to FIGS. 14 to 16, the guard 430 of the battery module 200 according to an embodiment of the present disclosure may protrude toward the plurality of battery cells 310.

According to this configuration of the present disclosure, the thermal safety of the battery module 200 may be improved. When a thermal event occurs from the battery cell 310, the guard 430 may block the venting gas g from flowing along the right and left direction or the Y-axis direction. As a result, the venting gas g may flow upward.

Referring to FIGS. 14 to 16, the pad 320 of the battery module 200 according to an embodiment of the present disclosure may be configured to have a higher height than the battery cell 310.

According to this configuration of the present disclosure, the thermal safety of the battery module 200 may be improved. When a thermal event occurs from the battery cell 310, the venting gas g may flow along the space between the insulation cover 400 and the plurality of battery cells 310. At this time, the pad 320 may block the venting gas g from flowing along the right and left direction or the Y-axis direction. As a result, the venting gas g may flow upward.

Referring to FIGS. 14 to 16, the guard 430 of the battery module 200 according to an embodiment of the present disclosure may support the pad 320. The top end of the pad 320 may be formed higher than the lower end of the guard 430. Accordingly, the guard 430 may support the upper portion of the pad 320.

According to this configuration of the present disclosure, the thermal safety of the battery module 200 may be improved. When a thermal event occurs from the battery cell 310, the pad 320 may block the venting gas g from flowing along the right and left direction or the Y-axis direction. At this time, the pad 320 may be bent or deformed in the right and left direction or the Y-axis direction due to the pressure of the venting gas g. At this time, since the guard 430 supports the pad 320, the pad 320 may stably block the flow of the venting gas g. As a result, the venting gas g may flow upward.

Referring to FIGS. 14 to 16, the pad 320 of the battery module 200 according to an embodiment of the present disclosure may be located between pairs of guards 430. The top end of the pad 320 may be located between the pairs of guards 430.

According to this configuration of the present disclosure, the thermal safety of the battery module 200 may be improved. The pair of guards 430 may support the pad 320 that is bent or deformed to the left or right.

The battery pack according to the present disclosure may include one or more battery modules 200 according to the present disclosure. For example, the battery pack according to the present disclosure may be configured to include a pack housing, so that a plurality of battery modules 200 according to the present disclosure are accommodated inside the pack housing. In this case, when the battery module 200 according to the present disclosure is accommodated, the effect of preventing heat propagation between battery modules 200 is excellent in an emergency situation such as thermal runaway, and sufficient time for a user to respond or escape may be secured.

In addition, the battery pack according to the present disclosure may further include various components other than the battery module 200, such as various battery pack components known at the time of filing of this application, such as a BMS, a bus bar, a relay, a current sensor, etc.

Meanwhile, components such as a BMS, a bus bar, a relay, and a current sensor may be included as components of the battery module 200 according to the present disclosure. In this case, the components such as a BMS, a bus bar, a relay, and a current sensor may be provided inside the case. In this case, the battery module may be referred to as a battery pack, and the case may be referred to as a pack housing. Moreover, in this case, the battery module according to the present disclosure may be a cell-to-pack type battery pack in which the battery cells are directly mounted in the pack housing.

The battery module 200 according to the present disclosure may be applied to a vehicle such as an electric vehicle or a hybrid electric vehicle. That is, the vehicle according to the present disclosure may include the battery module 200 according to the present disclosure or the battery pack according to the present disclosure. In addition, the vehicle according to the present disclosure may further include various other components included in the vehicle in addition to the battery module 200 or the battery pack. For example, the vehicle according to the present disclosure may further include a vehicle body, a motor, a control device such as an ECU (electronic control unit), in addition to the battery module 200 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a base plate;
a plurality of battery cells positioned on an upper surface of the base plate;
a top plate positioned above the plurality of battery cells and having a first venting hole;
a top cover coupled to an upper surface of the top plate and having a score line facing the first venting hole; and
an insulation cover positioned between the top plate and the plurality of battery cells and having a second venting hole facing the first venting hole.

2. The battery module according to claim 1,
wherein the score line is configured to be separated when a thermal event occurs from the battery cell.

3. The battery module according to claim 1,
wherein the insulation cover includes a protrusion that protrudes upward from a periphery of the second venting hole, and
wherein the protrusion is inserted into the first venting hole.

4. The battery module according to claim 3,
wherein the protrusion supports the top cover.

5. The battery module according to claim 3,
wherein the protrusion extends along the periphery of the second venting hole.

6. The battery module according to claim 3,
wherein the insulation cover further includes a support portion that extends from the protrusion into the second venting hole.

7. The battery module according to claim 6,
wherein the support portion supports the top cover.

8. The battery module according to claim 1,
wherein the score line extends along a periphery of the first venting hole.

9. The battery module according to claim 1,
wherein the score line forms a separation area.

10. The battery module according to claim 9,
wherein the insulation cover includes a protrusion that protrudes upward from a periphery of the second venting hole, and
wherein the protrusion supports the separation area.

11. The battery module according to claim 1,
wherein the insulation cover further includes a guard protruding toward the plurality of battery cells.

12. The battery module according to claim 11, further comprising:
a pad disposed between the plurality of battery cells,
wherein the guard supports the pad.

13. The battery module according to claim 12,
wherein the guard is provided as a pair, and
wherein a top end of the pad is located between the pair of guards.

14. The battery module according to claim 13,
wherein the pair of guards and the pad extend along a longitudinal direction of one battery cell among the plurality of battery cells.

15. The battery module according to claim 1, further comprising:
an adhesive member disposed between the insulation cover and the top plate.

16. A battery pack, comprising the battery module according to any one of claims 1 to 15.

17. A vehicle, comprising the battery module according to any one of claims 1 to 15.
